# EUROPÄISCHE PATENTSCHRIFT

(11) **EP 0 867 389 B1**
(45) Veröffentlichungstag und Bekanntmachung des Hinweises auf die Patenterteilung: **15.10.2003**
(21) Anmeldenummer: 98890056.9
(22) Anmeldetag: 03.03.1998
(51) Int. Cl.: B65G 53/52, B65G 53/12

(54) **Fördereinrichtung und Verfahren zum Fördern von pulverförmigem oder körnigem Material**
Device and method for conveying pulverulent or granular material
Dispositif et procédé de transport pour matière pulvérulente ou granuleuse

(30) Priorität: 19.03.1997 AT 48397
(43) Veröffentlichungstag der Anmeldung: 30.09.1998
(60) Teilanmeldung: 03015078.3
(73) Patentinhaber: MAI International GmbH, 9710 Feistritz/Drau (AT)
(72) Erfinder: Gerbl, Erich, 85459 Berglern (DE); Papousek, Hannes, Ing., 9371 Brückl (AT); Reiner, Erwin, Ing., 9543 Arriach (AT)
(74) Vertreter: Beer, Manfred, Dipl.-Ing.

(56) Entgegenhaltungen:
- EP-A- 0 653 366
- DE-A- 2 816 008
- DE-B- 1 148 938
- FR-A- 2 614 881
- US-A- 3 938 848

## Beschreibung

Die Erfindung betrifft eine Fördereinrichtung zum Fördern von pulverförmigem oder körnigem Material, wie Putzmörtel, von einem Speicherbehälter durch einen Förderschlauch zu einem Verbraucher, mit einem Kompressor zum Erzeugen von Druckluft zum Fördern des Materials, und mit einem Absperrventil zwischen dem Speicherbehälter und dem Förderschlauch und mit einem Zeitschaltglied.

Weiters betrifft die Erfindung ein Verfahren zum Fördern von pulverförmigem oder körnigem Material von einem Speicherbehälter zu einem Verbraucher mittels Förderluft in einem Förderschlauch.

Eine derartige Einrichtung zum Fördern von Material, wie Putzmörtel auf Gips-, Kalk- oder Zementbasis, ist bekannt. Das Material wird dabei von einem Silo mit Hilfe der Fördereinrichtung zu einer weiteren Verarbeitungsmaschine, z.B. zu einer Fertigputzmaschine, auch Mischpumpe genannt, gefördert, in der dem kontinuierlich geförderten Trockenmörtel kontinuierlich eine einstellbare Menge an Wasser zudosiert werden kann. Die Komponenten werden während des Durchlaufs in der Mischzone zu einem homogenen Naßmörtel aufbereitet. Anschließend wird der Mörtel mit einer Förderpumpe durch Mörtelschläuche zum Verarbeitungsort gepumpt. Mit einem Spritzgerät wird der Naßmörtel mit Druckluft beschleunigt und auf die zu verputzende Fläche aufgetragen.

Beim Fördern des Materials vom Silo zur Mischpumpe werden häufig relativ lange Schläuche verwendet, was einerseits zu Verstopfungen während des Betriebes führen kann und anderseits bei Unterbrechungen des Förderns des Materials zu Setzungen des Materials im Förderschlauch führen kann, die sich bei neuerlichem Beginn des Förderns nicht mehr selbsttätig lösen, was ebenfalls zu Verstopfungen führt. Der Förderschlauch muß dann abmontiert und von Hand aus gereinigt werden, was mehrere Stunden dauern kann.

In der US-A-3 938 848 sind eine gattungsgemäße Vorrichtung und ein gattungsgemäßes Verfahren offenbart. Bei diesen werden über ein Zeitschaltglied abwechselnd Förderphasen und Reinigungsphasen gesteuert, um ein Verstopfen der Förderleitung zu verhindern. Aus der US-A-3 938 848 ist es auch bekannt, zwischendurch die Materialzufuhr zu stoppen und die Förderleitung freizublasen, wenn der Druck in der Förderleitung über einen vorgegebenen Druck steigt.

Aus der EP-A-0 653 366 sind ein Verfahren und eine Vorrichtung bekannt, mit denen Förderleitungen für Schüttgüter nach Beendigung des Fördervorganges von Reststoffen freigeblasen werden.

Aufgabe der Erfindung ist, eine Fördereinrichtung und ein Verfahren anzugeben, bei denen die Gefahr von Verstopfungen im Förderschlauch verringert wird.

Gelöst wird diese Aufgabe bei der erfindungsgemäßen Fördereinrichtung dadurch, daß das Zeitschaltglied nach dem Schließen des Absperrventiles ein weiteres Fördern von Förderluft über eine vorgegebene Zeitspanne steuert, und daß ein weiteres Zeitschaltglied und eine Einrichtung zum Überwachen des Druckes im Förderschlauch, vorzugsweise ein Druckschalter, der einen vorgegebenen unteren Druck überwacht, vorgesehen sind, und daß die Zufuhr von Material aus dem Speicherbehälter zum Förderschlauch beginnt, wenn der untere Druck während der am weiteren Zeitschaltglied eingestellten Zeitspanne nicht überschritten wird.

Bei dem erfindungsgemäßen Verfahren wird diese Aufgabe dadurch gelöst, daß nach dem Unterbrechen der Zufuhr von Material vom Speicherbehälter zum Förderschlauch das Fördern von Förderluft im Förderschlauch aufrecht erhalten wird, daß nach dem Beginn des Förderns von Förderluft eine vorgegebene Zeitspanne vergeht, und daß, wenn während dieser Zeitspanne ein vorgegebener Druck nicht überschritten wird, die Zufuhr von Material aus dem Speicherbehälter in den Förderschlauch beginnt.

Erfindungsgemäß wird, nachdem die Zufuhr von Material aus dem Speicherbehälter bzw. Silo in den Förderschlauch unterbrochen worden ist, die Zufuhr von Förderluft in den Schlauch über eine vorgegebene Zeitspanne aufrechterhalten, was in der Folge als "Nachblasen" bezeichnet wird, wodurch im Förderschlauch verbliebenes Material aus diesem entfernt und beispielsweise zur Putzmaschine gefördert wird.

Dies kann erfolgen, wenn das Fördern von Material, z.B. nach Beendigung der Arbeit oder bei vollem Trockenmaterialtrichter der Putzmaschine, unterbrochen wird.

Beim Beginn des Förderns wird zunächst überprüft, ob der Förderschlauch verstopft ist, indem eine vorgegebene Zeitspanne lang überwacht wird, ob ein vorgegebener Druck nicht überschritten wird. Das Überschreiten des vorgegebenen Druckes wäre ein Zeichen für eine Verstopfung. Erst nach dieser Zeitspanne wird, soferne der vorgegebene Druck nicht überschritten wurde, das Absperrventil zwischen Speicherbehälter und Förderschlauch geöffnet und das Fördern von Material zur Putzmaschine beginnt.

In Weiterbildung der erfindungsgemäßen Fördereinrichtung kann aber auch vorgesehen sein, daß eine Einrichtung zum Überwachen des Drukkes im Förderschlauch, z.B. ein Druckschalter vorgesehen ist, und daß die Einrichtung zum Überwachen des Druckes steuerungsmäßig mit dem Absperrventil verbunden ist, wobei das Absperrventil geschlossen wird, wenn ein vorgegebener Maximaldruck überschritten wird. Erfindungsgemäß kann der Druck der Förderluft überwacht werden und beim Überschreiten eines vorgegebenen Grenzwertes wird die Zufuhr von Material aus dem Speicherbehälter in den Förderschlauch unterbrochen.

Wird bei der Erfindung ein vorgegebener, maximaler Druck überschritten, so ist dies ein Zeichen, daß sich im Förderschlauch eine Verstopfung gebildet hat oder gerade bildet. Durch Überwachen des Druckes wird allerdings verhindert, daß diese Verstopfung so weit voranschreitet, daß sie nur mehr durch einen manuellen Eingriff entfernt werden kann. Es wird dann über eine vorgegebene Zeitspanne nachgeblasen, um die Verstopfung zu lösen, was in den meisten Fällen ausreicht, den Förderschlauch freizublasen, worauf das Fördern von Material fortgesetzt werden kann.

Erfindungsgemäß kann die Fördereinrichtung dadurch weitergebildet sein, daß der Kompressor über ein Ventil, vorzugsweise ein Rückschlagventil, mit einem Druckspeicher verbunden ist, der mit dem Absperrventil verbunden ist, und weiters, daß der Kompressor über eine Leitung mit dem Speicherbehälter verbunden ist.

Es kann somit ein einziger Kompressor sowohl zum Steuern des Absperrventiles über einen Druckspeicher als auch zum Erzeugen bzw. Aufrechterhalten eines erforderlichen Druckes im Speicherbehälter, sowie zum Erzeugen der Förderluft herangezogen werden, was sowohl technisch als auch kostenmäßig vorteilhaft ist.

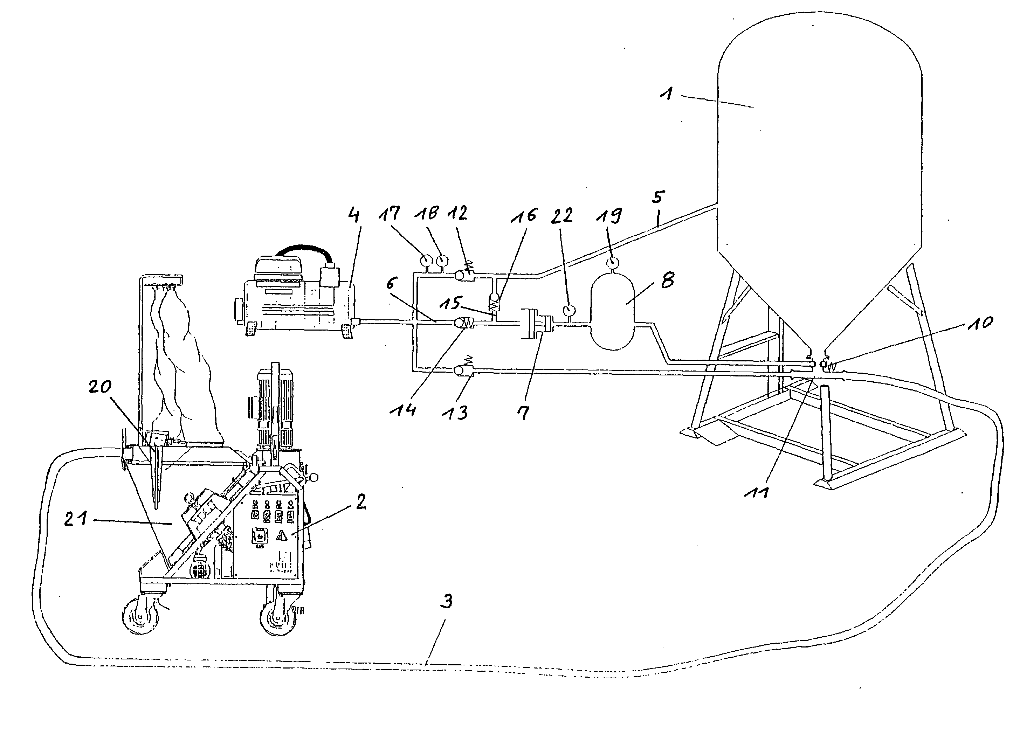

Weitere Merkmale und Vorteile der Erfindung ergeben sich aus den übrigen Unteransprüchen und der nachfolgenden Beschreibung eines Ausführungsbeispiels der Erfindung unter Bezugnahme auf die Zeichnung. Zum Fördern von pulverförmigem oder körnigem Material, wie Putze auf Gips-, Kalk- oder Zementbasis als Trockenmörtel, aus einem Speicherbehälter 1 zu einem Verbraucher 2, z.B. einer Putzmaschine oder Mörtelmischpumpe, durch einen Förderschlauch 3 ist ein Kompressor 4 vorgesehen, der Förderluft mit dem für das Fördern erforderlichen Druck erzeugt. Mit Hilfe der Förderluft wird Material durch den Förderschlauch 3 vom Speicherbehälter 1 zum Verbraucher 2 geblasen.

Der Kompressor 4 ist über eine Leitung 5 mit dem Speicherbehälter 1 und über eine Leitung 6 und einen Druckerhöher bzw. Druckübersetzer 7 mit einem Druckspeicher 8 verbunden. Der Druckspeicher 8 ist über eine Leitung 9 mit einem Ventil 10 verbunden, das die Verbindung zwischen dem Speicherbehälter 1 und dem Förderschlauch 3 öffnet bzw. schließt. Das Ventil 10 kann als Quetschventil (pneumatisches Flanschventil mit Gummimanschette) ausgeführt sein und ist in einem Blockverteiler 11 angeordnet, der die Verbindung zwischen dem Förderschlauch 3 und dem Speicherbehälter 1 bildet.

Statt des mit dem Kompressor 4 verbundenen Druckübersetzers 7 könnte auch ein weiterer Kompressor gegebenenfalls in Verbindung mit einer Notstromquelle vorgesehen werden.

In der Leitung 5 ist zwischen dem Speicherbehälter 1 und dem Kompressor 4 ein steuerbares Ventil 12 angeordnet. Im Förderschlauch 3 ist zwischen dem Blockverteiler 11 und dem Kompressor 4 ein steuerbares Ventil 13 angeordnet. In der Leitung zwischen dem Kompressor 4 und dem Druckspeicher 8 ist ein Rückschlagventil 14 angeordnet. In einer Verbindungsleitung 15 zwischen den Leitungen 5 und 6, deren Anschlüsse zwischen dem Ventil 12 und dem Speicherbehälter 1 bzw. dem Rückschlagventil 14 und dem Druckspeicher 8 liegen, ist ein Rückschlagventil 16 mit Durchlaßrichtung von der Leitung 5 zur Leitung 6 hin angeordnet.

In der Leitung 5 zwischen Kompressor 4 und Speicherbehälter 1 sind zwei Druckmeßeinrichtungen 17 und 18, z.B. Druckschalter, vorgesehen, deren Funktion in der Folge erläutert werden wird.

Wird die Förderanlage in Betrieb genommen, wird zunächst ein Vorblasen ausgeführt, wenn der Druck in der Leitung 5 zwischen einem vorgegebenen oberen Druck und einem vorgegebenen unteren Druck liegt, wie weiter unten erläutert werden wird.

Anschließend wird mit einer Druckmeßeinrichtung 19 der Druck im Druckspeicher 8 geprüft, dessen Minimalwert z.B. zwischen 2 und 3 bar, vorzugsweise bei 2,5 bar liegt. Ist der Druck kleiner, so bleiben die Ventile 12 und 13 zunächst geschlossen und der Kompressor 4 erzeugt über den Druckübersetzer 7 den erforderlichen, minimalen Druck von 2,5 bar im Druckspeicher 8.

Ist dieser Druck erreicht, dann wird das Ventil 12 geöffnet und mit Hilfe der Druckmeßeinrichtungen 17, 18 werden zwei Drücke geprüft, wobei die Druckmeßeinrichtung 17 einen z.B. zwischen 1,0 und 1,4 bar, vorzugsweise auf 1,2 bar eingestellten, unteren Druck prüft und die Druckmeßeinrichtung 13 einen z.B. zwischen 1,7 und 1,9 bar, vorzugsweise auf 1,8 bar eingestellten, oberen Druck prüft. Liegt der herrschende Druck zwischen diesen beiden Drücken, verbleibt die Anlage in Ruhe bis entweder der Druck im Druckspeicher 8 unter 2,5 bar sinkt oder eine Materialfüllstandsonde 20, die den Materialfüllstand in einem Aufgabetrichter 21 des Verbrauchers 2 mißt, ein Materialanforderungssignal an die Steuerung der Förderanlage sendet.

Liegt der Druck in der Leitung 5 unter 1,2 bar, dann wird durch den Kompressor 4 der Druck im Speicherbehälter 1 auf diesen Mindestdruck erhöht. Kann dieser Druck nach einem vorgegebenen Zeitraum, z.B. 20 min, nicht erreicht werden, so schaltet die Anlage nach Ablauf dieser Zeit wegen Störung ab.

Erhält die Steuerung der Förderanlage von der Materialsonde 20 ein Materialanforderungssignal, kann dieses über ein in der Steuerung vorhandenes Potentiometer und/oder ein im Gehäuse der Materialsonde 20 befindliches, stufenlos einstellbares Potentiometer zeitlich verschleppt werden. Nach Ablauf dieser Verzögerungszeit beginnt das sogenannte Vorblasen. Bei diesem Vorblasen läuft der Kompressor 4 an, gleichzeitig wird das Ventil 13 geöffnet und Förderluft wird durch den Förderschlauch 3 geblasen. Bleibt der Druck während der Vorblasdauer, z.B. 3 sek, unter dem an der Druckmeßeinrichtung 17 eingestellten unteren Druck von 1,2 bar, kann davon ausgegangen werden, daß der Förderschlauch 3 nicht verstopft ist und das Quetschventil 10 am Blockverteiler 11 wird geöffnet, wodurch Material aus dem Speicherbehälter 1 in den Förderschlauch 3 gedrückt wird. Material wird solange durch den Förderschlauch 3 in den Aufgabetrichter 21 des Verbrauchers (z.B. einer Mörtelmischpumpe) geblasen, bis die Materialsonde 20 das Erreichen des maximalen Füllstandes im Aufgabetrichter 21 an die Steuerung der Förderanlage zurückmeldet. Anschließend wird das Ventil 10 geschlossen, wodurch kein Material vom Speicherbehälter 1 mehr in den Förderschlauch 3 gelangen kann.

Der Kompressor 4 bläst anschließend innerhalb eines einstellbaren Zeitraumes nach, um Material, das sich noch im Förderschlauch 3 befindet, auszublasen. Die Dauer des Nachblasens kann an einem in der Steuerung der Anlage vorhandenen Zeitschaltglied eingestellt werden. Nach Ablauf der eingestellten Dauer schließt das Ventil 13 und der Kompressor 4 wird abgeschaltet.

Steigt während des Förderns der Druck über 1,8 bar an, was von der Druckmeßeinrichtung 18 erfaßt wird, so deutet dies eine Verstopfung im Förderschlauch 3 an. Es wird dann das Ventil 10 geschlossen und der Kompressor 4 versucht den im Förderschlauch 3 verbliebenen Rest des Materials in den Aufgabetrichter 21 der Putzmaschine 2 zu blasen, was in den häufigsten Fällen gelingen wird, da die Verstopfung noch nicht so weit fortgeschritten ist, daß der Förderschlauch 3 nicht freigeblasen werden kann.

Sinkt der Druck im Förderschlauch 3 innerhalb einer vorgegebenen Zeitspanne, z.B. 30 sek, wieder auf einen Wert unter 1,8 bar ab, so wird das Ventil 10 wieder geöffnet und Material wird erneut zum Verbraucher 2 gefördert. Sinkt der Druck innerhalb der angegebenen Zeitspanne nicht auf einen Wert unter 1,8 bar, dann wird der Förderschlauch 3 bis zum Ablauf der voreingestellten Nachblaszeit durchgeblasen. Anschließend schließt das Ventil 13, der Kompressor 4 wird abgeschaltet und eine Störungsanzeige meldet eine Verstopfung im Förderschlauch 3.

Steigt während der Förderphase mit anschließendem Nachblasen der Druck im Förderschlauch 3 über 1,8 bar an, so kann entweder gleichzeitig oder nach Beendigung der Nachblasphase eine Druckminderung im Speicherbehälter 1 durchgeführt werden, indem aus dem Speicherbehälter 1 Luft durch Öffnen der Ventile 12 und 13 durch den Förderschlauch 3 abgeblasen wird. Durch dieses Verringern des Drukkes im Speicherbehälter 1 wird die Förderung von Material aus dem Speicherbehälter 1 in den Förderschlauch 3 vermindert, so daß die Gefahr einer Verstopfung während der Förderphase sinkt.

Sinkt während der Förderphase der Druck im Förderschlauch 3, z.B. 20 sek lang, unter 1,2 bar ab, so wird nach Ablauf der Förderphase und anschließendem Nachblasen automatisch eine Druckerhöhung im Speicherbehälter 1 durchgeführt. Dabei wird der Druck im Speicherbehälter 1 durch Starten des Kompressors 4 und gleichzeitigem Öffnen des Ventiles 12 mit Druckluft auf 1,2 bar aufgepumpt. Dieser Vorgang dauert bis entweder der Druck von 1,2 bar erreicht oder eine Zeitspanne von z.B. 3 min vergangen ist.

Wenn während des Förderns der herrschende Druck geringer als 1,8 bar ist, und von der Materialsonde 20 kein Signal "Trichter voll" gemeldet wird, dann fördert die Anlage maximal z.B. 30 min lang Material durch den Förderschlauch 3. Wird diese Zeitspanne überschritten, so stoppt die Förderanlage selbsttätig und zeigt eine Fehlermeldung "Materialmangel" an.

Bei Stromausfall oder beabsichtigtem oder unbeabsichtigtem Abschalten der im Betrieb befindlichen Förderanlage werden gleichzeitig die Ventile 12 und 13 geöffnet. Ist das Ventil 10 zum Zeitpunkt des Stromausfalls bzw. Abschaltens gerade geöffnet, wird es automatisch geschlossen, so daß kein Material vom Speicherbehälter 1 in den Förderschlauch 3 mehr gelangen kann.

Durch das Öffnen der Ventile 12 und 13 wird der Druck im Speicherbehälter 1 zum Freiblasen des Förderschlauches 3 verwendet, damit die Anlage nach neuerlichem Einschalten ohne Verstopfung des Förderschlauches 3 wieder in Betrieb genommen werden kann. Nach Ablauf einer an einer Stelleinrichtung 22 einstellbaren, vorgegebenen Zeitspanne werden die Ventile 12 und 13 wieder geschlossen, damit nicht die gesamte Siloluft zum Freiblasen des Förderschlauches 3 verwendet wird.

Die Dauer des Nachblasens nach einem Unterbrechen der Materialzufuhr vom Speicherbehälter 1 in den Förderschlauch 3, unabhängig von der Ursache, kann an die jeweilige Schlauchlänge angepaßt werden. Selbst ein vollständiges Entleeren des Silos 1 ist auf diesem Weg möglich.

Wird während der Nachblaszeit eine Materialanforderung an die Steuerung der Förderanlage übertragen, so öffnet das Ventil 10, damit das Fördern von Material zur Putzmaschine 2 wieder ungehindert aufgenommen werden kann.

Allgemein hat beim Starten der Anlage die Erhöhung des Steuerdruckes im Druckspeicher 8 absolute Priorität gegenüber allen anderen Funktionen der Förderanlage. Während des Betriebes ist nur das Nachblasen und Fördern wichtiger als die Steuerdruckerhöhung. Es ist jedoch zu beachten, daß die Förderphase nicht länger als eine vorgegebene Zeitspanne, z.B. 30 sek, dauern darf, wenn eine Steuerdruckerhöhung notwendig wird. Dies ist notwendig und sinnvoll, damit immer genug Druckluft zum Schließen des Quetschventils 10 vorhanden ist.

Das Erhöhen des Druckes im Speicherbehälter 1 hat grundsätzlich Nachrang gegenüber den Funktionen des Erhöhens des Steuerdruckes im Druckspeicher 8, sowie des Förderns und des Nachblasens.

Das Nachblasen wiederum hat absoluten Nachrang gegenüber einer Materialanforderung, jedoch Vorrang gegenüber einer Steuerdruckerhöhung. Dies bedeutet, daß das Nachblasen in jedem Fall beendet wird und nachfolgend eine Steuerdruckerhöhung im Druckspeicher 8 durchgeführt wird. Da über das Ventil 14 bzw. 16 immer aus dem Speicherbehälter 1 Druck für eine Druckerhöhung im Druckspeicher- 8 zur Verfügung steht, ist ein ausreichender Druck für das Schließen des Quetschventils immer vorhanden.

Das gleiche gilt für das Fördern selbst im Hinblick auf eine Steuerdruckerhöhung.

Eine Druckminderung im Speicherbehälter 1 hat Nachrang gegenüber einer Steuerdruckerhöhung, sowie dem Fördern und dem Nachblasen, was aber auch im Zuge einer Druckminderung im Speicherbehälter 1 durchgeführt werden kann.

Wenn nach dem Einschalten der Förderanlage der Druck in der Leitung 5 bei geöffnetem Ventil 12 über 1,2 bar liegt, wird mittels Druckluft aus dem Speicherbehälter 1 bei geöffnetem Ventil 13 der Förderschlauch 3 z.B. 40 sek lang leergeblasen, wobei dieser Vorgang aber auch abgebrochen werden kann.

Wird nach dem Start der Förderanlage der Steuerdruck im Druckspeicher 8 erhöht, der Mindestwert von 2,5 bar aber nicht innerhalb einer bestimmten Zeit erreicht, so schaltet die Anlage wegen Störung ab.

Das Ventil 12 bleibt während der Bereitschaftsphase, d.h. im eingeschalteten Zustand der Anlage, wenn alle Drücke den vorgegebenen Werten entsprechen, immer geöffnet. Durch dieses geöffnete Ventil wird der Steuerdruck im Druckspeicher 8 durch den Druckübersetzer 7 durch die Druckluft des Speicherbehälters 1 immer auf einen optimalen Wert über 2,5 bar gehalten.

Erhält die Förderanlage über eine Dauer von z.B. 15 min keine Signale, erfolgt eine Prüfung des Druckes im Speicherbehälter 1 durch Starten des Kompressors für eine Mindestdauer von z.B. 5 sek, der bei Bedarf eine Druckerhöhung im Speicherbehälter 1 folgt.

Wie bereits erwähnt, hat auch eine Steuerdruckerhöhung während der Betriebsphase der Anlage keinen absoluten Vorrang. Erhält die Steuerung ein Signal, daß eine Steuerdruckerhöhung erforderlich ist, wird der Fördervorgang über eine vorgegebene Zeitspanne weiter fortgesetzt. Wenn der Fördervorgang bis dahin nicht beendet ist, wird das Nachblasen mit einer darauffolgenden automatischen Steuerdruckerhöhung durchgeführt. Wird während des Nachblasens eine Steuerdruckerhöhung notwendig, wird der Nachblasvorgang unabhängig von der vorgegebenen Zeitspanne vollendet und anschließend eine Steuerdruckerhöhung durchgeführt.

Zusammenfassend kann ein bevorzugtes Ausführungsbeispiel der erfindungsgemäßen Fördereinrichtung wie folgt beschrieben werden:

Beim Fördern von pulverförmigem oder körnigem Material durch einen Förderschlauch von einem Speicherbehälter zu einem Verbraucher, z.B. dem Fördern von Trockenmörtel zu einer einer Putzmaschine, wird Förderluft auch nach dem Abgeben von Material aus dem Vorratsbehälter Förderluft durch den Förderschlauch geblasen, um in diesem enthaltenes Material durch das Nachblasen zu entfernen. So wird verhindert, daß nicht der Förderschlauch während Stillstandzeiten, also Zeiten, in welchen kein Material gefördert wird, zusetzt oder verstopft.

Bei einer so arbeitenden Fördereinrichtung kann ein Zeitschaltglied vorgesehen sein, welches nach dem Schließen des Absperrventils zwischen dem Speicherbehälter und dem Förderschlauch den Kompressor zum Erzeugen von Druckluft und Fördern des Materials durch den Förderschlauch für das Nachblasen über eine vorgegebene Zeitspanne in Betrieb hält.

## Patentansprüche

1. Fördereinrichtung zum Fördern von pulverförmigem oder körnigem Material, wie Putzmörtel, von einem Speicherbehälter (1) durch einen Förderschlauch (3) zu einem Verbraucher (2), mit einem Kompressor (4) zum Erzeugen von Druckluft zum Fördern des Materials, und mit einem Absperrventil (10) zwischen dem Speicherbehälter (1) und dem Förderschlauch (3) und mit einem Zeitschaltglied, **dadurch gekennzeichnet, daß** das Zeitschaltglied nach dem Schließen des Absperrventiles (10) ein weiteres Fördern von Förderluft über eine vorgegebene Zeitspanne steuert, und daß ein weiteres Zeitschaltglied und eine Einrichtung (17) zum Überwachen des Druckes im Förderschlauch (3), vorzugsweise ein Druckschalter, der einen vorgegebenen unteren Druck überwacht, vorgesehen sind, und **daß** die Zufuhr von Material aus dem Speicherbehälter (1) zum Förderschlauch (3) beginnt, wenn der untere Druck während der am weiteren Zeitschaltglied eingestellten Zeitspanne nicht überschritten wird.

2. Fördereinrichtung nach Anspruch 1, **dadurch gekennzeichnet, daß** eine Einrichtung (18) zum Überwachen des Druckes im Förderschlauch (3), z.B. ein Druckschalter, vorgesehen, und **daß** die Einrichtung (18) zum Überwachen des Druckes steuerungsmäßig mit dem Absperrventil (10) verbunden ist.

3. Fördereinrichtung nach Anspruch 1 oder 2, **dadurch gekennzeichnet, daß** der Kompressor (4) über ein Ventil (14), vorzugsweise ein Rückschlagventil, mit einem Druckspeicher (8) verbunden ist, der mit dem Absperrventil (10) verbunden ist.

4. Fördereinrichtung nach Anspruch 3, **dadurch gekennzeichnet, daß** zwischen dem Kompressor (4) und dem Druckkessel (8) in Druckerhöher (7) angeordnet ist.

5. Fördereinrichtung nach einem der Ansprüche 1 bis 4, **dadurch gekennzeichnet, daß** der Kompressor (4) über eine Leitung (5) mit dem Speicherbehälter (1) verbunden ist.

6. Fördereinrichtung nach Anspruch 5, **dadurch gekennzeichnet, daß** die Verbindungsleitungen (5, 6) vom Kompressor (4) zum Speicherbehälter (1) und zum Druckspeicher (8) über eine Leitung (15) mit einem Ventil (16) miteinander verbunden sind, das vorzugsweise als Rückschlagventil mit Sperrichtung von der Leitung (6) zum Druckkessel (8) zur Leitung (5) zum Speicherbehälter (1) ausgeführt ist.

7. Fördereinrichtung nach einem der Ansprüche 1 bis 6, **dadurch gekennzeichnet, daß** am Verbraucher (2) eine Meßeinrichtung (20) in einem Aufgabetrichter (21) vorgesehen ist, welche ein Materialanforderungssignal an eine Steuereinrichtung der Förderanlage abgibt.

8. Fördereinrichtung nach einem der Ansprüche 1 bis 5, **dadurch gekennzeichnet, daß** in der Leitung (5) vom Kompressor (4) zum Speicherbehälter (1) und im Förderschlauch (3) zwischen dem Kompressor (4) und dem Absperrventil (10) jeweils ein steuerbares Absperrventil (12, 13) vorgesehen sind.

9. Verfahren zum Fördern von pulverförmigem oder kömigem Material von einem Speicherbehälter zu einem Verbraucher mittels Förderluft in einem Förderschlauch, **dadurch gekennzeichnet, daß** nach dem Unterbrechen der Zufuhr von Material vom Speicherbehälter zum Förderschlauch das Fördern von Förderluft im Förderschlauch aufrecht erhalten wird, **daß** nach dem Beginn des Förderns von Förderluft eine vorgegebene Zeitspanne vergeht, und **daß**, wenn während dieser Zeitspanne ein vorgegebener Druck nicht überschritten wird, die Zufuhr von Material aus dem Speicherbehälter in den Förderschlauch beginnt.

10. Verfahren nach Anspruch 9, **dadurch gekennzeichnet, daß** das Fördern von Förderluft über eine vorgegebene Zeitspanne aufrecht erhalten wird.

11. Verfahren nach Anspruch 9 oder 10, **dadurch gekennzeichnet, daß** der Druck der Förderluft überwacht wird, und **daß** beim Überschreiten eines vorgegebenen Grenzwertes die Zufuhr von Material aus dem Speicherbehälter in den Förderschlauch unterbrochen wird.

12. Verfahren nach einem der Ansprüche 9 bis 11, **dadurch gekennzeichnet, daß** das Unterbrechen der Verbindung zwischen dem Speicher-behälter und dem Förderschlauch mit Druckluft aus einem Druckspeicher gesteuert wird, und **daß** ein vorgegebener Minimaldruck im Druckspeicher überwacht wird.

13. Verfahren nach Anspruch 12, **dadurch gekennzeichnet, daß** das Fördern von Förderluft unterbrochen wird, wenn der Minimaldruck nach einer vorgegebenen Zeitspanne nicht erreicht wird.

14. Verfahren nach einem der Ansprüche 10 bis 13, **dadurch gekennzeichnet, daß** wenn bei Erhalt eines Materialanforderungssignals vom Verbraucher das Fördern von Förderluft, gegebenen falls nach einer zeitlichen Verzögerung, beginnt und die Zufuhr von Material vom Speicherbehälter zum Förderschlauch erfolgt.

15. Verfahren nach einem der Anspruche 9-14, **dadurch gekennzeichnet, daß** bei Erhalt eines Stoppsignals für das Fördern vom Material vom Verbraucher weiterhin Förderluft während eines vorgegebenen Zeitintervalls gefördert wird nachdem die Zufuhr von Material vom Speicherbehälter zum Förderschlauch unterbrochen wurde.

16. Verfahren nach Anspruch 15, **dadurch gekennzeichnet, daß**, wenn während des Förderns der Förderdruck unter einem vorgegebener Wert liegt und vom Verbraucher kein Stoppsignal ergeht, nur eine vorgegebene Zeitspanne wegen Materialmangels Förderluft durch den Förderschlauch gefördert wird.

17. Verfahren nach einem der Ansprüche 9 bis 16, **dadurch gekennzeichnet, daß**, wenn während der Förderphase der Druck im Förderschlauch unter einen vorgegebenen Wert sinkt, nach Ablauf der Förderphase und anschließendem Nachblasen der Druck im Speicherbehälter auf einen vorgegebenen Wert erhöht wird.

18. Verfahren nach einem der Ansprüche 9 bis 17, **dadurch gekennzeichnet, daß**, wenn während der Förderphase der Druck im Förderschlauch über einen vorgegebenen Wert steigt, der Druck im Speicherbehälter verringert wird.

19. Verfahren nach Anspruch 18, **dadurch gekennzeichnet, daß** das Verringern des Druckes im Speicherbehälter durch Ablassen von Luft durch den Förderschlauch erfolgt.

20. Verfahren nach einem der Ansprüche 11 bis 19, **dadurch gekennzeichnet, daß**, wenn nach einem Unterbrechen der Materialzufuhr vom Speicherbehälter zum Förderschlauch der Druck im Förderschlauch innerhalb einer vorgegebenen Zeitspanne unter den vorgegebenen Maximalwert sinkt, die Verbindung wieder geöffnet wird.

21. Verfahren nach einem der Ansprüche 9 bis 20, **dadurch gekennzeichnet, daß**, wenn nach einem Beenden des Förderns von Förderluft, die zum Beispiel durch einen Kompressor erzeugt wird, die allenfalls offene Verbindung zwischen Speicherbehälter und dem Förderschlauch geschlossen wird, und **daß** anschließend Luft aus dem Speicherbehälter durch den Förderschlauch über eine vorgegebene Zeitspanne abgeleitet wird.

22. Verfahren nach einem der Ansprüche 9 bis 21, **dadurch gekennzeichnet, daß** nach dem Einschalten der Anlage zuerst während einer vorgegebenen Zeitspanne Förderluft durch den Förderschlauch gefördert wird, soferne der herrschende Druck im Förderschlauch zwischen einem vorgegebenen oberen und unteren Druckwert liegt.

## Claims

1. A conveyor device for feeding powdered or granular material, such as plaster mortar, from a storage container (1) through a feed hose (3) to a user (2), with a compressor (4) for creating compressed air for feeding the material, and with a shut-off valve (10) between the storage container (1) and the feed hose (3) and with a time switch element, **characterized in that** the time switch element controls a further feeding of compressed air over a predetermined interval of time after closure of the shut-off valve (10), and **in that** a further time switch element and a device (17) for monitoring the pressure in the feed hose (3), preferably a pressure switch, which monitors a predetermined lower pressure, are provided, and **in that** the supply of material from the storage container (1) to the feed hose (3) begins when the lower pressure is not exceeded during the interval of time set by the further time switch element.

2. A conveyor device according to claim 1, **characterized in that** a device (18) is provided for monitoring the pressure in the feed hose (3), e.g. a pressure switch, and **in that** the device (18) for monitoring pressure is connected to the shut-off valve (10) for control thereof.

3. A conveyor device according to claim 1 or 2, **characterized in that** the compressor (4) is connected through a valve (14), preferably a non-return valve, to a pressure accumulator (8) which is connected to the shut-off valve (10).

4. A conveyor device according to claim 3, **characterized in that** a pressure booster (7) is arranged between the compressor (4) and the pressure vessel (8).

5. A conveyor device according to any of claims 1 to 4, **characterized in that** the compressor (4) is connected through a line (5) to the storage container (1).

6. A conveyor device according to claim 5, **characterized in that** the connecting lines (5, 6) from the compressor (4) to the storage container (1) and to the pressure accumulator (8) are connected together through a line (15) with a valve (16), preferably implemented in the form of a non-return valve blocking in the direction from the line (6) to the pressure vessel (8) to the line (5) to the storage container (1).

7. A conveyor device according to any of claims 1 to 6, **characterized in that** a measuring device (20) is provided at the user (2) in a feed hopper (21) and issues a material feed signal to a control device of the conveyor system.

8. A conveyor device according to any of claims 1 to 5, **characterized in that** a controllable shut-off valve (12, 13) is provided in each of the line (5) from the compressor (4) to the storage container (1) and the feed hose (3) between the compressor (4) and the shut-off valve (10).

9. A method of feeding powdered or granular material from a storage container to a user by means of compressed air in a feed hose, **characterized in that**, after interrupting the feed of material from the storage container to the feed hose, the feed of compressed air in the hose is maintained, **in that** a predetermined interval of time elapses after the beginning of the feed of feed air, and **in that** when a predetermined pressure is not exceeded during this interval of time, the feed of material out of the storage container into the feed hose begins.

10. A method according to claim 9, **characterized in that** the feed of compressed air is maintained over a predetermined interval of time.

11. A method according to claim 9 or 10, **characterized in that** the pressure of the feed air is monitored and **in that**, on exceeding a predetermined limit value, the feed of material out of the storage container into the feed hose is interrupted.

12. A method according to any of claims 9 to 11, **characterized in that** the interruption of the connection between the storage container and the feed hose is controlled with compressed air from a pressure accumulator and **in that** a predetermined minimum pressure in the pressure accumulator is monitored.

13. A method according to claim 12, **characterized in that** the feed of feed air is interrupted when the minimum pressure is not attained after a predetermined interval of time.

14. A method according to any of claims 10 to 13, **characterized in that**, on reception of a material demand signal from the user, the feed of feed air begins, optionally after a time delay, and the feed of material from the storage container to the feed hose is effected.

15. A method according to claim 9 to 14, **characterized in that**, on reception of a stop signal for the feed of material from the user, feed air is fed further during a predetermined interval of time, after the feed of material from the storage container to the feed hose has been interrupted.

16. A method according to claim 15, **characterized in that**, when the feed pressure lies below a predetermined value during the feeding and no stop signal from the user occurs, feed air is fed through the feed hose only for a predetermined interval of time on account of lack of material.

17. A method according to any of claims 9 to 16, **characterized in that**, when the pressure in the feed hose sinks below a predetermined value during the feed phase, the pressure in the storage container is increased to a predetermined value after elapse of the feed phase and following after-blowing.

18. A method according to any of claims 9 to 17, **characterized in that**, when the pressure in the feed hose rises above a predetermined value during the feed phase, the pressure in the storage container is reduced.

19. A method according to claim 18, **characterized in that** the reduction of the pressure in the storage container is effected by venting air through the feed hose.

20. A method according to any of claims 11 to 19, **characterized in that**, when the pressure in the feed hose sinks below the predetermined maximum value within a predetermined interval of time, following an interruption of the material feed from the storage container to the feed hose, the connection of opened again.

21. A method according to any of claims 9 to 20, **characterized in that** the possibly open connection between the storage container and the feed hose is closed after termination of the feed of feed air, which is generated by a compressor for example, and **in that** air is then bled off from the storage container through the feed hose for a predetermined interval of time.

22. A method according to any of claims 9 to 21, **characterized in that**, after switching on the system, feed air is initially fed through the feed hose during a predetermined interval of time, insofar as the pressure obtaining in the feed hose lies between predetermined upper and lower pressure values.

## Revendications

1. Dispositif de transport pour le transport de matériau en poudre ou en grains, tel que du mortier d'enduit, depuis un réservoir de stockage (1) à travers une conduite souple de transport (3) jusqu'à un utilisateur (2), comprenant un compresseur (4) pour produire de l'air comprimé pour le transport du matériau, une soupape d'arrêt (10) placée entre le réservoir de stockage (1) et la conduite souple de transport (3), ainsi qu'un organe formant minuterie, **caractérisé en ce que** l'organe formant minuterie, après la fermeture de la soupape d'arrêt (10), commande le maintien de l'alimentation en air de transport pendant un intervalle de temps prédéterminé, **en ce qu'**il est prévu un organe formant minuterie supplémentaire et un dispositif (17) pour surveiller la pression dans la conduite souple de transport (3 ), de préférence un interrupteur manométrique, qui surveille une pression inférieure prédéterminée, et **en ce que** l'envoi de matériau du réservoir de stockage (1) vers la conduite souple de transport (3) est déclenché si la pression pendant l'intervalle de temps réglé au niveau de la organe formant minuterie supplementaire ne depasse pas la pression inférieure.

2. Dispositif de transport selon la revendication 1, **caractérisé en ce qu'**il est prévu un dispositif (18), par exemple un interrupteur manométrique, pour surveiller la pression dans la conduite souple de transport (3) et **en ce que** le dispositif (18) de surveillance de la pression est relié sur le plan de la commande à la soupape d'arrêt (10).

3. Dispositif de transport selon la revendication 1 ou 2, **caractérisé en ce que** le compresseur (4) est relié par l'intermédiaire d'une soupape (14), de préférence d'une soupape anti-retour, à un réservoir de pression (8) qui communique avec la soupape d'arrêt (10).

4. Dispositif de transport selon la revendication 3, **caractérisé en ce qu'**un multiplicateur de pression (7) est disposé entre le. compresseur (4) et le réservoir de pression (8).

5. Dispositif de transport selon une des revendications 1 à 4, **caractérisé en ce que** le compresseur (4) est relié au réservoir de stockage (1) par l'intermédiaire d'une conduite (5).

6. Dispositif de transport selon la revendication 5, **caractérisé en ce que** les conduites de liaison (5, 6) menant du compresseur (4) au réservoir de stockage (1) et au réservoir de pression (8) sont reliées entre elles par l'intermédiaire d'une conduite (15) avec une soupape (16) qui, de préférence est conformée en soupape anti-retour bloquante dans le sens conduite (6) menant au réservoir de pression (8) - conduite (5) menant au réservoir de stockage (1).

7. Dispositif de transport selon la revendication 1 à 6, **caractérisé en ce qu'**il est prévu dans l'utilisateur (2) un dispositif de mesure (20) dans une trémie de chargement (21), qui délivre un signal de demande de matériau à un dispositif de commande du dispositif de transport.

8. Dispositif de transport selon la revendication 1 à 5, **caractérisé en ce qu'**il est prévu respectivement dans la conduite (5) menant du compresseur (4) au réservoir de stockage (1) et dans la conduite souple de transport (3) entre le compresseur (4) et la soupape d'arrêt (10) une soupape d'arrêt (12, 13) commandée.

9. Procédé pour le transport de matériau en poudre ou en grains d'un réservoir de stockage jusqu'à un utilisateur à l'aide de l'air de transport dans une conduite souple de transport, caractérisé en qu après l'interruption de l'alimentation en matériau du réservoir de stockage vers la conduite souple de transport, on maintient l'alimentation en air de transport dans la conduite souple de transport, en ce qu'après le début de l'alimentation en air de transport il s'écoule un laps de temps déterminé et en ce que si une pression prédéterminée n'est pas dépassée pendant cet intervalle de temps, l'alimentation en matériau du réservoir de stockage vers la conduite souple de transport commence.

10. Procédé selon la revendication 9, **caractérisé en ce qu'**on maintient l'alimentation en air de transport pendant un intervalle de temps prédéterminé.

11. Procédé selon la revendication 9 ou 10, **caractérisé en ce qu'**on surveille la pression de l'air de transport et **en ce que** si une valeur limite prédéterminée est dépassée, on interrompt l'alimentation en matériau du réservoir de stockage vers la conduite souple de transport.

12. Procédé selon une des revendications 9 à 11, **caractérisé en ce que** la coupure de la liaison entre le réservoir de stockage et la conduite souple de transport est commandée au moyen d'air comprimé venant d'un réservoir de pression et **en ce qu'**on surveille une pression minimale de l'air dans le réservoir de pression.

13. Procédé selon la revendication 12, **caractérisé en ce qu'**on coupe l'alimentation enair de transport lorsque la pression minimale n'est pas atteinte au bout d'un intervalle de temps prédéterminé.

14. Procédé selon une des revendications 10 à 13, **caractérisé en ce que** lorsqu'un signal de demande de matériau est reçu de l'utilisateur, l'alimentation en air de transport commence, le cas échéant après une temporisation, et le transport de matériau du réservoir de stockage vers la conduite souple de transport a lieu.

15. Procédé selon une des revendications 9 à 14, **caractérisé en ce que** lors de la réception d'un signal d'arrêt pour le transport de matériau émis par l'utilisateur, l'alimentation en air de transport est maintenue pendant un intervalle de temps prédéterminé après la coupure de l'alimentation de matériau du réservoir de stockage vers la conduite souple de transport.

16. Procédé selon la revendication 15, **caractérisé en ce que** si pendant le transport la pression de transport est inférieure à une valeur prédéterminée, et qu'aucun signal d'arrêt n'est délivré par l'utilisateur, on envoie seulement pendant un intervalle de temps prédéterminé suite au manque de matériau de l'air de transport dans la conduite souple de transport.

17. Procédé selon une des revendications 9 à 16, **caractérisé en ce que** si pendant la phase de transport la pression dans la conduite souple de transport chute en-dessous d'une valeur prédéterminée, à la fin de la phase de transport et après soufflage,. on élève la pression dans le réservoir de stockage jusqu'à une valeur prédéterminée.

18. Procédé selon une des revendications 9 à 17, **caractérisé en ce que** si pendant la phase de transport la pression dans la conduite souple de transport s'élève au-dessus d'une- valeur prédéterminée, on abaisse la pression dans le réservoir de stockage.

19. Procédé selon la revendication 18, **caractérisé en ce que** l'abaissement de la pression dans le réservoir de stockage a lieu par chasse d'air à travers la conduite souple de transport.

20. Procédé selon une des revendications 11 à 19, **caractérisé en ce que** si après une interruption de l'alimentation de matériau du réservoir de stockage vers la conduite souple de transport la pression dans la conduite souple de transport chute pendant un intervalle de temps prédéterminé en-dessous de la valeur maximale prédéterminée, on ouvre de nouveau la liaison.

21. Procédé selon une des revendications 9 à 20, **caractérisé en ce qu'**après la fin de l'alimentation d'air de transport, réalisée par exemple par un compresseur, on ferme la liaison normalement ouverte entre le réservoir de stockage et la conduite souple de transport et **en ce qu'**ensuite on dévie de l'air du réservoir de stockage dans la conduite souple de transport pendant un intervalle de temps prédéterminé.

22. Procédé selon une des revendications 9 à 21, **caractérisé en ce qu'**après la mise en service de l'installation on envoie d'abord de l'air de transport dans la conduite souple de transport pendant un intervalle de temps prédéterminé jusqu'à ce que la pression régnant dans la conduite souple de transport soit comprise entre une valeur de pression supérieure et une valeur de pression inférieure.
